(19) Europäisches Patentamt
European Patent Office
Office européen des brevets

(11) Publication number: **0 177 271 B1**

(12) **EUROPEAN PATENT SPECIFICATION**

(45) Date of publication of patent specification: **05.06.91**

(51) Int. Cl.[5] **G02F 1/133**, C08G 61/10

(21) Application number: **85306841.9**

(22) Date of filing: **26.09.85**

The file contains technical information submitted after the application was filed and not included in this specification

# (54) Liquid crystal devices.

(30) Priority: **27.09.84 GB 8424402**

(43) Date of publication of application: **09.04.86 Bulletin 86/15**

(45) Publication of the grant of the patent: **05.06.91 Bulletin 91/23**

(84) Designated Contracting States: **AT BE CH DE FR GB IT LI LU NL SE**

(56) References cited:
**GB-A- 1 062 733**

**PATENT ABSTRACTS OF JAPAN, vol. 6, no. 183 (P-143)[1061], 18th September 1982; & JP-A-57 97 519 (TOKYO SHIBAURA DENKI K.K.) 17-06-1982**

**PROCEEDINGS OF THE SYMPOSIUM ON ORDER IN POLYMERIC MATERIALS, MOLECULAR CRYSTALS AND LIQUID CRYSTALS, Waltham, Massachusetts, 25th-26th August 1983, vol. 105, nos. 1-4, pages 259-271, Gordon and Breach Science Publishers Inc., New York, US; M. STAMM: "Synthesis and characterization of conducting oriented fibres of poly-para-phenylene"**

(73) Proprietor: **IMPERIAL CHEMICAL INDUSTRIES PLC**
**Imperial Chemical House, Millbank**
**London SW1P 3JF(GB)**

(72) Inventor: **Barlow, William Andrew**
**White Gate New Hey Sandfield Park**
**West Derby Liverpool 12(GB)**
Inventor: **Raynes, E. Peter Ministry of Defence**
**Royal Signals and Radar Estab. St. Andrews Road**
**Great Malvern Worcs. WR14 3PS(GB)**

(74) Representative: **Bate, Bernard James et al**
**Imperial Chemical Industries PLC Legal Department: Patents PO Box 6**
**Welwyn Garden City Herts, AL7 1HD(GB)**

**EP 0 177 271 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to liquid crystal devices, particularly liquid crystal devices comprising an alignment layer, and to the preparation of such surfaces.

The structure of liquid crystal display devices is widely described in the literature (see for example the section "Digital Displays" at pp 724 et seq in "Encyclopaedia of Chemical Technology" 3rd Ed. Kirk Othmer) as also is the use of an alignment layer to orientate the liquid crystal.

In conventional liquid crystal devices used for display purposes, the liquid crystal composition is often sandwiched between two alignment layers. Both of the alignment layers are supported on transparent electrodes which in turn are supported on transparent, e.g. glass, cover plates. An important contribution of the alignment layer is that it causes the liquid crystal to orientate at a slight angle (typically 1 or 2° with polyimide) - the so-called "tilt bias angle" - to its surface. The tilt bias angle breaks the symmetry that a zero tilt alignment would give and the director then turns in the direction of the bias when the field is applied.

In some cases a tilt bias angle of greater than 5° is required - for example greater than 7°, or even 10°; this is particularly so for 270° twisted nematic liquid crystal devices. As mentioned above, the commonly employed polyimide alignment layers give tilt bias angles of only a very few degrees; higher angles are generally obtained by more expensive means, for example by evaporating silicon monoxide from an oblique source under high vacuum.

We have now found that surprisingly polyphenylene polymers are capable of producing alignment layers having certain advantages. Thus, we have found it possible, after appropriate rubbing, to obtain a tilt bias angle of between 5° and 15°, particularly between 7° and 12° and especially between 9° and 11°.

The use of polyphenylene polymer as the alignment layer, or as a component thereof, is also advantageous over the silicon monoxide method in that the assembly technique is similar to that employed for polyimide.

A further advantage of polyphenylene is its relative transparency, particularly when prepared as described, in the critical visible range 500-700 nm.

Accordingly the invention provides a cell for a liquid crystal device comprising at least one alignment layer comprising a polyphenylene polymer. The preferred polymer for use according to the invention is one prepared from a cyclohexadiene.

According to a second aspect of the present invention there is provided a process for the preparation of a cell for a liquid crystal display device which process comprises the steps of depositing a layer of a polycylohexadiene on a transparent electrode and then converting the polycyclohexadiene into a polyphenylene.

Polycyclohexadienes and polyphenylenes suitable for use in the present invention are more fully described in our published European Patent Specifications Nos 76605 and 107895, the disclosures in which specifications are incorporated herein by way of reference. Preferably the polycyclohexadiene is a poly(1,2-disubstituted cyclohexa-3,5-diene) homo-polymer and more preferably the 1,2-substituents are acoyl, e.g. alkanoyl groups having up to six carbon atoms; or alkyl carbonate groups, i.e. ROCOO-, in which the alkyl group R has up to ten carbon atoms.

The polycyclohexadiene is preferably spin-coated onto the transparent electrode although we do not exclude the possibility that other coating techniques including typically those known in the electronics art may be used.

Fabrication of the actual devices of the invention may be by conventional techniques which have been widely published, for example, unidirectional rubbing of the polyphenylene layer is conventional and may be carried out by techniques well known in the electronics art, e.g. using rayon or cotton cloth. Other processes such as selection of the liquid crystal, production of the cell, filling and sealing of the cell and provision of electronic control are conventional.

Conversion of the polycyclohexadiene layer into the polyphenylene layer may be carried out by the processes disclosed in our aforesaid European Patent Specifications.

The thickness of each alignment layer in liquid crystal display devices according to the present invention may vary widely and in any given cell may be the same or different, for example they will usually range from 0.2 or even less to 20 micrometers, typically between 0.5 and 2 micrometers, and usually between 0.7 and 1.5 micrometers.

The liquid crystal composition used in the present invention may be any liquid crystal composition which is conventionally used in liquid crystal display devices, e.g. a mixture of cyanobiphenyl or equivalent cyclohexyl molecules of the type

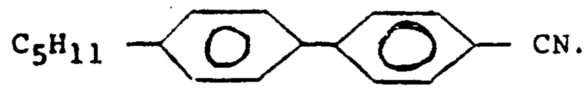

or

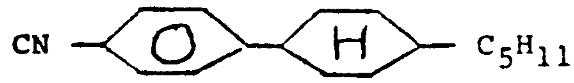

The transparent electrodes which are used in the present invention may comprise any electrode material which is conventionally used in liquid crystal display devices.

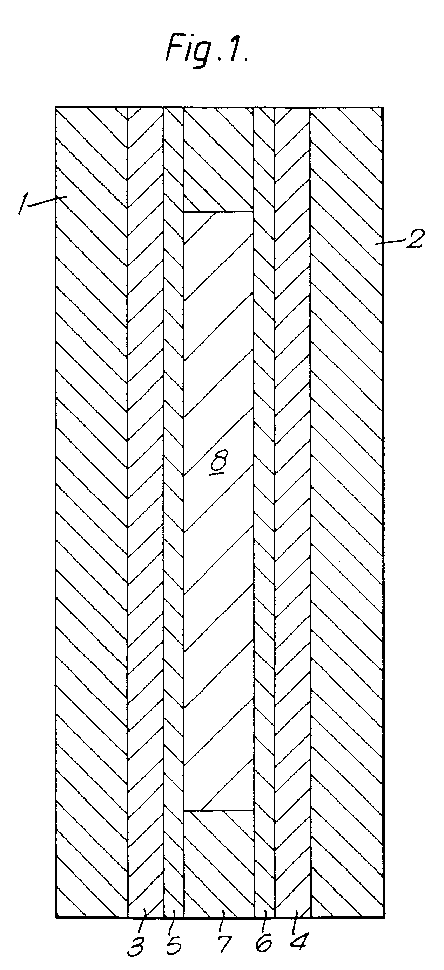

The present invention will be further described by reference to the accompanying Figure 1 which shows, by way of example only, a cell for a liquid crystal display device according to the present invention.

In Figure 1, two glass plates 1 and 2, covered wholly or partly by transparent electrodes 3 and 4 of indium-tin oxide and then polyphenylene layers 5 and 6 form, with a spacer 7, a cell into which a liquid crystal composition 8 is injected.

In use, the electrodes 1 and 2 are charged to appropriate potentials with consequential alignment of the liquid crystals in the cell.

Example 1

Glass plates, each 38 mm x 26 mm x 1.0 mm, were coated with an indium-tin oxide layer by conventional means, and washed in a clean air cabinet with filtered chloroform (AR grade).

Each of the plates was covered, on the indium-tin oxide side with a 0.85 ml aliquot of poly(benzene-cis-glycol dimethylcarbonate) solution in N-methyl pyrrolidone (NMP) and spun at 10,000 rpm for 4 minutes in a Headway Research Inc Model 1-ECIOID photo resist spinner to obtain a uniform coating. The relationship between polymer concentration in the NMP dope and coating thickness after drying at 175 °C for 30 minutes is indicated in Table 1.

The polymer coating was then aromatised to polyphenylene by heating in a nitrogen atmosphere at 10 °C/min to 350 °C and maintaining this temperature for 4 hours.

**TABLE 1**

| Sample | Dope composition % w/w solids in NMP* | Coating thickness after aromatisation (micrometers) |
|---|---|---|
| 1 | 30.6 | 0.76 |
| 2 | 21.6 | 0.43 |
| 3 | 15.5 | 0.42 |

* Solids composition was poly(benzene-cis-glycol dimethylcarbonate) + 10% w/w O-terphenyl.

Cells comprising the alignment layers so prepared were made up in the conventional manner.

The liquid crystal tilt bias angle of the polyphenylene coating was then determined by the method of Becker et al (Mol Cryst Liq Cryst 72, 17-25 (1981). (Typically this comprises rubbing the polymer for a few seconds with a belt of rayon under a contact pressure between 200 and 700 grammes with the cloth travelling at 10 metres per minute. The rubbing work is usually in the range $10^3$ - $10^5$ $J.m^{2}$. The magnetic null method of Scheffer and Nehring (J App Phys (1977) 48, 1783-1792) can then be applied to determine the tilt bias angle.

Values obtained for plates prepared as described were between 9 and 10°.

Example 2

Comparison of light transmission behaviour of polyphenylene and polyimide

A series of glass slides (75 mm x 25 mm x 1 mm) were coated with different thicknesses of polyphenylene as described in Example 1. For comparison a similar series of slides were coated with polyimide (Pyralin 2550, DuPont). After curing the U.V. visible absorbance spectra of each slide was determined in the range 350-750 nm using a Pye Unicam PU8800 spectrometer using a glass blank as reference. The absorbance of both sets of coatings as a function of coating thickness of 400, 500, 600 and 700 nm is such that the light absorbance of polyphenylene is less than that of polyimide at 500, 600 and 700 nm but the U.V. cut off of polyphenylene occurs at a higher wavelength than polyimide, so that the order is reversed at 400 nm.

Example 3

Plates prepared as described in Example 1 were assembled into a standard 8 micrometers twisted nematic cell the cavity of which was then filled with BDH cyanobiphenyl mixture E7.

The cell was examined in a polarizing microscope, when it was seen that with no voltage applied the cell looked uniformly dark between parallel polarisers, indicating alignment of the liquid crystal along the rubbing direction activation with 3 volts AC switching the layer on.

**Claims**

**1.** A liquid crystal alignment layer comprising a polyphenylene polymer in contact with an electrode component supported upon a substrate.

**2.** An alignment layer as claimed in Claim 1 characterised in that the polyphenylene polymer is prepared from a cyclohexadiene.

**3.** An alignment layer as claimed in Claim 1 of thickness from up to 20 micrometers.

**4.** An alignment layer as claimed in Claim 3 of thickness 0.5 to 2 micrometers.

**5.** An alignment layer as claimed in any of Claims 1 to 4 and capable of providing a tilt bias angle between $5^\circ$ and $15^\circ$.

**6.** A cell for a liquid crystal display device comprising an alignment layer as claimed in any one of the preceding claims.

**7.** A liquid crystal display device comprising a cell as claimed in Claim 6 containing therewithin a suitable liquid crystal composition.

**8.** A method of preparing a cell for a liquid crystal display device which comprises the steps of forming upon a suitable supported electrode component an alignment layer comprising a polyphenylene polymer.

**9.** A method as claimed in Claim 8 in which the preparation of the polyphenylene comprises the steps of forming a layer of a polycyclohexadiene upon the electrode component, and aromatising the said polycyclohexadiene to polyphenylene.

**Revendications**

**1.** Couche d'alignement pour cristaux liquides comprenant un polyphénylène polymère en contact avec un composant d'électrode supporté sur un substrat.

**2.** Couche d'alignement suivant la revendication 1, caractérisée en ce que le polyphénylène polymère est préparé à partir d'un cyclohexadiène.

**3.** Couche d'alignement suivant la revendication 1, d'une épaisseur s'élevant jusqu'à 20 $\mu$m.

**4.** Couche d'alignement suivant la revendication 3, d'une épaisseur de 0,5 à 2 $\mu$m.

5. Couche d'alignement suivant l'une quelconque des revendications 1 à 4, capable d'établir un angle de polarisation d'inclinaison entre 5 et 15°.

6. Cellule pour un dispositif d'affichage à cristaux liquides, comprenant une couche d'alignement suivant l'une quelconque des revendications précédentes.

7. Dispositif d'affichage à cristaux liquides comprenant une cellule suivant la revendication 6, contenant, à l'intérieur, une composition appropriée pour cristaux liquides.

8. Procédé de préparation d'une cellule pour un dispositif d'affichage à cristaux liquides, qui comprend les stades de former, sur un composant d'électrode supporté approprié, une couche d'alignement comprenant un polyphénylène polymère.

9. Procédé suivant la revendication 8, dans lequel la préparation du polyphénylène comprend les stades de formation d'une couche d'un polycyclohexadiène sur le composant d'électrode et d'aromatisation du polycyclohexadiène en polyphénylène.

**Ansprüche**

1. Ausrichtschicht für Flüssigkristalle, enthaltend ein Polyphenylenpolymer in Kontakt mit einem auf einem Substrat aufgebrachten Elektrodenbestandteil.

2. Ausrichtschicht nach Anspruch 1, dadurch gekennzeichnet, daß das Polyphenylenpolymer aus einem Cyclohexadien hergestellt ist.

3. Ausrichtschicht nach Anspruch 1, mit einer Dicke von bis zu 20 $\mu$m.

4. Ausrichtschicht nach Anspruch 3, mit einer Dicke von 0,5 bis 2 $\mu$m.

5. Ausrichtschicht nach einem der Ansprüche 1 bis 4, welche einen schrägen Vorspannwinkel zwischen 5° und 15° zur Verfügung stellen kann.

6. Zelle für eine Flüssigkristallanzeigeeinrichtung, enthaltend eine Ausrichtschicht nach einem der vorangegangenen Ansprüche.

7. Flüssigkristallanzeigeeinrichtung, enthaltend eine Zelle nach Anspruch 6, die darin eine geeignete Flüssigkristallzusammensetzung enthält.

8. Verfahren zur Herstellung einer Zelle für eine Flüssigkristallanzeigeeinrichtung, welches aus den Stufen besteht, auf einem in geeigneter Weise aufgebrachten Elektrodenbestandteil eine Ausrichtschicht, die ein Polyphenylenpolymer enthält, auszubilden.

9. Verfahren nach Anspruch 8, worin die Herstellung des Polyphenylen die Stufen umfaßt, eine Schicht aus einem Polycyclohexadien auf dem Elektrodenbestandteil auszubilden und das Polycyclohexadien in Polyphenylen zu aromatisieren.

Fig.1.